# EUROPÄISCHE PATENTANMELDUNG

(11) **EP 4 159 029 A1**
(43) Veröffentlichungstag der Anmeldung: **05.04.2023**
(21) Anmeldenummer: 22197323.3
(22) Anmeldetag: 23.09.2022
(51) Int. Cl.: A01J 25/12, A01J 27/04, A21C 9/08, A21C 9/06

(54) **VORRICHTUNG ZUM FALTEN EINER KÄSEPORTION**

(30) Priorität: 04.10.2021 DE 102021125652
(71) Anmelder: ALPMA Alpenland Maschinenbau GmbH, 83543 Rott am Inn (DE)
(72) Erfinder: OSIANDER, Jürgen, 83026 Rosenheim (DE); WAGNER, Lars, 83539 Pfaffing (DE); HUBATSCHEK, Josef, 83093 Bad Endorf (DE)
(74) Vertreter: Manitz Finsterwald Patent- und Rechtsanwaltspartnerschaft mbB

(57) **Zusammenfassung**

Die vorliegende Erfindung betrifft eine Vorrichtung (12) zum Falten einer Käseportion (K) in Form eines flachen Quaders, umfassend
eine Transportbandeinrichtung mit zumindest einem flexiblen Transportband (16, 16a, 16b) mit einer Auflagefläche für die Käseportion, wobei die Transportbandeinrichtung dazu ausgebildet ist, die Käseportion von einem Einlaufbereich (E) in einer Transportrichtung (T) entlang einer Transportstrecke zu einem Auslaufbereich (A) zu transportieren, wobei der Einlaufbereich der Transportbandeinrichtung eine Zufuhrebene definiert, und
eine Falteinrichtung, die zumindest abschnittsweise im Bereich der Transportstrecke angeordnet ist und die dazu ausgebildet ist, zumindest einen ersten äußeren Längsbereich der Transportbandeinrichtung abschnittsweise aus der Zufuhrebene heraus aufzustellen, so dass ein erster Abschnitt (S) der Käseportion um eine Faltachse auf einen zweiten Abschnitt (S) der Käseportion faltbar ist.

## Beschreibung

Die Erfindung betrifft eine Vorrichtung und ein Verfahren zum Falten einer Käseportion in Form eines flachen Quaders sowie ein System zur Bearbeitung einer solchen Käseportion.

Es ist bekannt, dass bestimmte Käsesorten während der Herstellung gefaltet und gegebenenfalls zusammengedrückt werden, wobei sie ihre charakteristische Form erhalten. Traditionell werden beispielsweise Halloumi, aber auch andere, insbesondere im Mittelmeerraum hergestellte halbfeste Käsesorten, in gefalteter Form angeboten, wobei optional Kräuter, insbesondere Minze, in einen bei dem Falten erzeugten Käsefalz eingelegt werden. Typischerweise wird der Faltvorgang manuell ausgeführt, wobei jede Einzelportion separat gehandhabt werden muss. Die manuelle Faltung ist zeitintensiv und kann die Kontinuität des Produktionsprozesses gefährden. Darüber hinaus können eine gleichbleibende Präzision und zuverlässige Fertigstellung der Faltung nur schwer gewährleistet werden, sodass das Anfallen von Ausschussware unvermeidbar ist. Es ist daher wünschenswert, ein automatisiertes Falten von Käseportionen zu ermöglichen, um Zeit, Personal und Kosten einzusparen und die Kontinuität und den Durchsatz des Produktionsprozesses sowie die resultierende Produktqualität zu verbessern.

Der vorliegenden Erfindung liegt die Aufgabe zugrunde, eine Vorrichtung und ein Verfahren zum Falten einer Käseportion bereitzustellen, die dies ermöglicht.

Diese Aufgabe wird gelöst durch eine Vorrichtung mit den Merkmalen des Anspruchs 1, ein System mit den Merkmalen des Anspruchs 19 und ein Verfahren mit den Merkmalen des Anspruchs 20.

Eine Vorrichtung zum Falten einer Käseportion in Form eines flachen Quaders, insbesondere eine Käsefaltvorrichtung, umfasst eine Transportbandeinrichtung mit zumindest einem flexiblen Transportband mit einer Auflagefläche für die Käseportion. Die Transportbandeinrichtung ist dazu ausgebildet, die Käseportion von einem Einlaufbereich in einer Transportrichtung entlang einer Transportstrecke zu einem Auslaufbereich zu transportieren. Der Einlaufbereich der Transportbandeinrichtung definiert eine Zufuhrebene, die in einem Betriebszustand der Vorrichtung bevorzugt in der Horizontalen angeordnet ist. Die Vorrichtung umfasst eine Falteinrichtung, die zumindest abschnittsweise im Bereich der Transportstrecke angeordnet ist und die dazu ausgebildet ist, zumindest einen ersten äußeren Längsbereich der Transportbandeinrichtung abschnittsweise aus der Zufuhrebene heraus aufzustellen, so dass ein erster Abschnitt der Käseportion um eine Faltachse auf einen zweiten Abschnitt der Käseportion faltbar ist.

Die Käseportion in Form eines flachen Quaders ist typischerweise nicht perfekt quaderförmig ausgebildet, sondern kann durchaus unregelmäßige Kanten oder Seitenflächen und gewisse Variationen in der Höhe aufweisen. Dies kann beispielsweise den Produkteigenschaften des zu verarbeitenden Käses und/oder vorangehenden Schritten des Produktionsverfahrens geschuldet sein. Die Käseportion kann plattenförmig sein. Beispielsweise weist die Käseportion eine Stärke von 20-30 mm, insbesondere 25 mm, und eine Breite, insbesondere quer zur Transportrichtung, von 120-160 mm, insbesondere 140 mm auf. Andere Abmessungen können je nach Käsesorte und gewünschter Portionsgröße ohne weiteres vorgesehen sein. Die Länge der Käseportion, insbesondere in Transportrichtung, kann je nach gewünschtem Produkt beispielsweise zwischen 40-400 mm betragen, oder auch kleiner oder sogar größer sein. Die Käseportion kann einer Einzelportion entsprechen oder mehrere Einzelportionen umfassen.

Ein Grundgedanke der Erfindung besteht darin, mittels der Transportbandeinrichtung einen, typischerweise parallel zu der Transportrichtung orientierten, Randbereich der transportierten Käseportion aufzustellen. Die Transportbandeinrichtung weist zu diesem Zweck mindestens ein Transportband auf, das ausreichend flexibel ist, um, zusammen mit der Käseportion, aufgestellt, verdrillt, ausgemuldet, oder auf sich selbst, insbesondere um 180 Grad, gefaltet zu werden. Das wenigstens eine Transportband kann elastisch oder biegsam sein, oder auch aus zueinander, beispielsweise gelenkig, beweglichen Gliedern ausgebildet sein. Die Transportbandeinrichtung kann entlang der Transportstrecke in mehrere Abschnitte unterteilt sein, welche verschiedenartig ausgebildet sein können, insbesondere welche eine verschiedene Anzahl von Transportbändern oder verschiedenartige Transportbänder aufweisen.

Das zumindest eine Transportband kann in einer Ausführungsform als sogenanntes Endlosband ausgebildet sein. Dieses kann als geschlossene Bandschlaufe um beispielsweise zwei oder mehr Transportwalzen geführt sein. Das zumindest eine Transportband kann fluiddicht ausgebildet sein, beispielsweise aus einem Kunststoff- oder Silikonmaterial. So kann eine besonders gleichmäßige Ausübung des Falt- oder Pressdrucks auf die zu faltende Käseportion gewährleistet werden. Wahlweise kann für gewisse Anwendungen oder zur Vermeidung von Anhaftungen auch ein poröses Transportband gewählt werden.

Unter der Auflagefläche für die Käseportion ist die Fläche zu verstehen, in welcher die Transportbandeinrichtung mit der Käseportion in Kontakt steht.

Die Käseportion läuft in einem Einlaufbereich in Transportrichtung in die Transportbandeinrichtung ein. In dem Einlaufbereich ist die Transportbandeinrichtung bevorzugt zumindest annähernd eben ausgebildet. Wie bereits erläutert, definiert er eine Zufuhrebene der Transportbandeinrichtung.

Die eigentliche Faltung der Käseportion erfolgt mittels der Falteinrichtung während die Käseportion in Transportrichtung entlang der Transportstrecke transportiert wird, indem zumindest ein erster äußerer Längsbereich der Transportbandeinrichtung durch die Falteinrichtung aus der Zufuhrebene herausgehoben und aufgestellt wird. Unter einem ersten äußeren Längsbereich der Transportbandeinrichtung ist insbesondere ein Bereich der Transportbandeinrichtung zu verstehen, der zumindest im Wesentlichen längs zu der Transportrichtung orientiert ist, und der, insbesondere in dem Einlaufbereich bzw. an einem einlaufseitigen Ende der Falteinrichtung, an einer Außenseite der Transportbandeinrichtung angeordnet ist. Der erste äußere Längsbereich bildet einen Teil der Auflagefläche für die Käseportion aus, auf dem ein, insbesondere längs der Transportrichtung orientierter, erster Abschnitt, insbesondere eine erster äußerer Randbereich, der Käseportion aufliegt. Insbesondere erstreckt sich der erste äußere Randbereich der Käseportion nicht weiter als bis zu einer parallel zu der Transportrichtung verlaufenden Mittelebene der Käseportion in diese hinein.

Die Faltung der Käseportion erfolgt um eine Faltachse, indem der erste Abschnitt um die Faltachse relativ zu einem zweiten Abschnitt der Käseportion gefaltet wird. In einigen Ausführungsformen ist die Faltachse parallel zu der Transportrichtung orientiert. Die Faltachse liegt bevorzugt in der Mittelebene der Käseportion, wobei die Käseportion symmetrisch bezüglich der Mittelebene ausgebildet sein kann, sodass nach der Faltung der erste und der zweite Abschnitt der Käseportion vollständig überlappen.

Aufgrund der Materialeigenschaften und der Abmessungen der Käseportion weist diese nach der Faltung nicht zwingend einen deutlich ausgeprägten Falz auf, sondern oftmals lediglich eine Biegung, sodass grundsätzlich die Neigung der gefalteten Käseportion besteht, sich nach dem Durchlaufen der Falteinrichtung wieder zu öffnen. Um dennoch ein effektives Falten durch die Falteinrichtung zu gewährleisten, können die Verweildauer der Käseportion in der Falteinrichtung und der darin auf die Käseportion ausgeübte Faltdruck angepasst werden. Die Falteinrichtung kann derart ausgestaltet sein, dass ein definierter Falt- oder Pressdruck auf die teilweise und/oder vollständig gefaltete Käseportion ausgeübt wird. Zudem kann die Verweildauer in der Falteinrichtung derart gesteuert oder geregelt sein, dass die Käseportion ausreichend Zeit hat, sich an die gefaltete Form anzupassen. Beispielsweise kann die Falteinrichtung derart ausgestaltet sein, dass das Falten der Käseportion entlang der Transportstrecke sukzessive und/oder kontinuierlich erfolgt. Alternativ oder zusätzlich können die Länge der Falteinrichtung und/oder die Geschwindigkeit der Transportbandeinrichtung aneinander angepasst werden, um die Verweildauer in der Falteinrichtung festzulegen, beispielsweise auf eine Verweildauer zwischen 30 s und 1 min oder wahlweise eine andere geeignete Zeitdauer. Dies kann durch eine Steuereinrichtung der Käsefaltvorrichtung erfolgen.

Es kann vorgesehen sein, dass nach dem Durchlaufen der Falteinrichtung der erste äußere Längsbereich der Transportbandeinrichtung so weit aus der Zufuhrebene heraus aufgestellt bzw. umgefaltet wurde, dass er parallel zu einem zweiten äußeren Längsbereich der Transportbandeinrichtung ausgerichtet ist, der bezüglich einer in Transportrichtung verlaufenden Mittelebene der Transportbandeinrichtung dem ersten äußeren Längsbereich gegenüber angeordnet ist. Der erste Abschnitt der Käseportion kann beispielsweise um etwa 180 Grad aufgestellt bzw. umgefaltet werden, um letztlich auf dem zweiten Abschnitt der Käseportion zum Liegen zu kommen. Dabei kann der Bereich der Auflagefläche, auf der der zweite Abschnitt der Käseportion aufliegt, mittels eines Gegenhalteelements unterstützt sein, um einen ausreichenden Falt- bzw. Pressdruck für eine effektive Faltung der Käseportion zu gewährleisten.

Weitere vorteilhafte Ausführungsformen der vorliegenden Erfindung sind den Ansprüchen, der Beschreibung und den beigefügten Zeichnungen entnehmen.

Gemäß einer Ausführungsform ist die Falteinrichtung dazu ausgebildet, einen dem ersten äußeren Längsbereich bezüglich einer Mittelebene der Transportbandeinrichtung gegenüberliegenden zweiten äußeren Längsbereich der Transportbandeinrichtung abschnittsweise aus der Zufuhrebene heraus aufzustellen. Der erste und der zweite äußere Längsbereich werden beispielsweise symmetrisch aufgestellt, insbesondere symmetrisch zu der Mittelebene der Käseportion. Beispielsweise kann die Falteinrichtung dazu ausgebildet sein, den ersten und den zweiten Längsbereich jeweils um bis zu 90 Grad aufzustellen, so dass spätestes bei Erreichen des auslaufseitigen Endes der Falteinrichtung - bevorzugt bereits im ersten Drittel, Viertel oder gar Fünftel der Falteinrichtung - der erste und der zweite Abschnitt der Käseportion parallel zueinander und insbesondere jeweils senkrecht zu der Zufuhrebene angeordnet sind. Die Faltachse kann dabei in der Mittelebene der Käseportion liegen.

Gemäß einer weiteren Ausführungsform umfasst die Transportbandeinrichtung ein Falttransportband, wobei der erste äußere Längsbereich der Transportbandeinrichtung einen ersten seitlichen Randbereich eines Transportabschnitts des Falttransportbands und der zweite äußere Längsbereich der Transportbandeinrichtung einen dem ersten seitlichen Randbereich bezüglich der Mittelebene des Falttransportbands gegenüberliegenden zweiten seitlichen Randbereich des Transportabschnitts des Falttransportbands umfasst.

Unter einem Transportabschnitt des Falttransportbands oder eines Transportbands im Allgemeinen ist insbesondere derjenige Bandabschnitt zu verstehen, auf dem jeweils eine Auflagefläche für eine Käseportion angeordnet sein kann. Im Kontrast dazu ist unter dem Transportabschnitt nicht der Bereich des Falttransportbands oder Transportbands zu verstehen, der sich, im Falle eines Endlosbands, gewissermaßen auf dem Rückweg zu dem Einlaufbereich oder dem einlaufseitigen Ende des Transportbands befindet und zum Transport einer Käseportion daher nicht eingesetzt werden kann.

Das Falttransportband kann, zumindest abschnittsweise, das einzige Transportband der Transportbandeinrichtung sein. Insbesondere im Einlaufbereich und/oder im Bereich der Falteinrichtung kann das Falttransportband als einziges Transportband vorgesehen sein.

In Transportrichtung wird das Falttransportband auf seinen Außenseiten von einem ersten und einem zweiten seitlichen Randbereich begrenzt, welche in der Falteinrichtung, wie vorstehend beschrieben, aus der Zufuhrebene heraus aufstellbar sind. Werden beispielsweise der erste und der zweite seitliche Randbereich jeweils um etwa 90 Grad aufgestellt, so bildet das Falttransportband gewissermaßen eine Einhüllende für die gefaltete Käseportion und kann als - bildlich gesprochen - Pressgurt dienen, um eine effektive Faltung der Käseportion zu gewährleisten.

Alternativ kann die Transportbandeinrichtung zumindest ein erstes und ein zweites Transportband umfassen, wobei das erste und das zweite Transportband in Transportrichtung nebeneinander angeordnet sind, wobei der erste äußere Längsbereich der Transportbandeinrichtung durch einen Transportabschnitt des ersten Transportbands und der zweite äußere Längsbereich der Transportbandeinrichtung durch einen Transportabschnitt des zweiten Transportbands gebildet werden. Das erste und das zweite Transportband bilden somit den ersten bzw. den zweiten äußeren Längsbereich der Transportbandeinrichtung und tragen den ersten bzw. zweiten Abschnitt der Käseportion. Die separaten Transportbänder werden bevorzugt synchron betrieben, beispielsweise durch mittels Zwangskopplung verbundene Antriebswalzen, eine gemeinsame Antriebswalze o. ä..

Die Falteinrichtung kann eine Führungsanordnung umfassen, die zumindest ein erstes Führungselement aufweist, das den ersten äußeren Längsbereich der Transportbandeinrichtung - z.B. den ersten Randbereich des Falttransportbands oder den Transportabschnitt des ersten Transportbands - auf einer der Auflagefläche abgewandten Seite entlang der Transportstrecke zumindest abschnittsweise untergreift und diesen in Richtung einer Mittelebene der Transportbandeinrichtung aufstellt. Bei dem ersten Führungselement kann es sich um ein geeignet geformtes Blechteil oder Kunststoffteil handeln, das kostengünstig hergestellt werden kann.

Ferner kann die Führungsanordnung ein zweites Führungselement umfassen, das den zweiten äußeren Längsbereich der Transportbandeinrichtung - z.B. den zweiten Randbereich des Falttransportbands oder den Transportabschnitt des zweiten Transportbands - auf einer der Auflagefläche abgewandten Seite entlang der Transportstrecke zumindest abschnittsweise untergreift und diesen in Richtung einer Mittelebene der Transportbandeinrichtung aufstellt. Das für das erste Führungselement Gesagte gilt in analoger Form auch für das zweite Führungselement.

Das erste und das zweite Führungselement können zumindest abschnittsweise symmetrisch bezüglich der Mittelebene der Transportbandeinrichtung und/oder der Auflagefläche ausgebildet und/oder angeordnet. Bevorzugt sind sie bezüglich der Mittelebene der Transportbandeinrichtung voneinander beabstandet angeordnet, wobei sich der Abstand in Transportrichtung verringert, insbesondere kontinuierlich verringert. Durch die Verringerung des Abstands der Führungselemente werden die beiden gefalteten Abschnitte der Käseportion zunehmend stärker zusammengepresst, insbesondere um den gefalteten Zustand zu stabilisieren.

Gemäß einer weiteren Ausführungsform sind das erste und/oder das zweite Führungselement derart angeordnet, dass sie mit der Zufuhrebene zumindest abschnittsweise im Wesentlichen einen Winkel von 90 Grad einschließen. Es ist grundsätzlich auch möglich, dass ein kleinerer Winkel gewählt wird, sodass sich eine - im Querschnitt gesehen - V-förmige Geometrie ergibt. Es ist aber auch möglich, die Führungselemente abschnittsweise über 90° zu überkippen, beispielsweise um die der Faltachse gegenüberliegenden Enden der Abschnitte der Käseportion stärker gegeneinander zu pressen als den Rest der genannten Abschnitte.

Konstruktiv am einfachsten und daher auch kostengünstig ist es, wenn das erste und/oder das zweite Führungselemente im Wesentlichen eben ausgebildet sind. Um das Falttransportband oder die beiden Transportbänder "sanfter" aufzustellen, kann jedoch auch vorgesehen sein, dass das erste und/oder das zweite Führungselement derart ausgebildet und/oder angeordnet sind, dass der durch das erste und/oder zweite Führungselement und die Zufuhrebene eingeschlossene Winkel im Verlauf der Transportstrecke in Transportrichtung, insbesondere kontinuierlich, zumindest abschnittsweise variiert. Bevorzugt nimmt eine Verkippung des oder der Führungselement(e) zu der Mittelebene hin zu, bis diese ein Maximum erreicht und dann für einen Teil der Transportstrecke im Wesentlichen konstant bleibt. Insbesondere ausgehend von dem Einlaufbereich der Falteinrichtung kann eine in Transportrichtung zunehmende Verkippung des oder der Führungselement(e) von Vorteil sein, beispielsweise um das Falttransportband oder die beiden Transportbänder flächig zu unterstützen. Ferner lässt sich die Kinematik des Faltprozesses durch eine geeignete Auslegung des ersten und/oder des zweiten Führungselements beeinflussen.

Wie bereits erwähnt können das erste und/oder das zweite Führungselement zumindest ein Führungsblech umfassen. Bevorzugt weist eine der Transportbandeinrichtung, insbesondere dem Transportabschnitt der Transportbandeinrichtung, zugewandte Seite des Führungsblechs eine glatte Oberfläche auf. Dadurch werden unter anderem die Reibung in der Falteinrichtung minimiert und eine unerwünschte Strukturierung der auf der Transportbandeinrichtung aufliegenden Käseportion verhindert.

Das erste und/oder das zweite Führungselement können zumindest eine Transportrolle umfassen. Gerade im in Transportrichtung vorderen, insbesondere einlaufseitigen, Teil des Führungselements kann eine solche Rolle die Reibung zwischen der Transportbandeinrichtung und dem entsprechenden Führungselement oder deren Beanspruchung minimieren. Bei geeigneter Anordnung läuft beispielsweise die Transportbandeinrichtung über die Rolle auf die in Transportrichtung dahinterliegenden Komponenten des Führungselements, sodass eine Führung über der Bandeinrichtung über eine Kante vermieden wird. Eine ähnliche Wirkung kann durch eine Einlaufkante, eine Einlaufrundung oder eine Art trichterförmigen Einlaufbereich der Führungselemente erzielt werden.

Die zumindest eine Transportrolle des ersten und/oder zweiten Führungselements kann eine Rotationsachse aufweisen, die bezüglich der Zufuhrebene zu der Mittelebene der Transportbandeinrichtung hin verkippt ist, insbesondere wie vorstehend bereits für das erste und/oder zweite Führungselement beschrieben. Beispielsweise kann die Verkippung zumindest im Wesentlichen mit einer Verkippung weiterer Komponenten des Führungselements oder insbesondere mit einer Verkippung der Auflagefläche korrelieren.

Grundsätzlich ist auch denkbar, dass das Führungselement mehrere Rollen umfasst, die in Transportrichtung hintereinander angeordnet sind und eine Art Rollenbahn bilden.

Gemäß einer weiteren Ausführungsform weist die Falteinrichtung zumindest einen Niederhalter auf, der dazu ausgebildet ist, eine auf der Auflagefläche angeordnete Käseportion auf ihrer der Auflagefläche abgewandten Seite mit einer Niederhaltekraft zu beaufschlagen, insbesondere wobei die Käseportion entlang der Faltachse mit der Niederhaltkraft beaufschlagbar ist. Dies erleichtert die Faltung der Käseportion. Einem Verschieben oder Verdrehen der Käseportion bezüglich der Auflagefläche bei Einsetzen der Faltwirkung kann durch den Niederhalter ebenfalls vorgebeugt werden. Bevorzugt ist der Niederhalter in einem Eingangsbereich der Falteinrichtung angeordnet. Es kann vorgesehen sein, dass der Niederhalter in Transportrichtung versetzbar und/oder senkrecht dazu höhenverstellbar angeordnet ist. Der Niederhalter kann zumindest ein Niederhalterad umfassen, das um eine senkrecht zur Transportrichtung orientierte Rotationsachse aktiv oder passiv drehbar gelagert ist. Denkbar ist, dass mehrere Niederhalter, insbesondere Niederhalteräder, in Transportrichtung hintereinander angeordnet sind.

Insbesondere weist die Falteinrichtung eine Ausgabeeinrichtung auf, die dazu ausgebildet ist, eine gefaltete Käseportion in eine definierte Lage zu überführen und auszugeben und/oder auf der Transportbandeinrichtung abzulegen. Bevorzugt wird durch die Ausgabeeinrichtung eine Ausgabe der gefalteten Käseportion erzeugt, bei der diese auf der Seite liegt, insbesondere derart, dass die Faltachse und/oder eine Faltebene der Käseportion parallel zu einer aufliegenden Seitenfläche der Käseportion verlaufen. Die Faltebene der Käseportion ist dabei eine Ebene, die die Faltachse einschließt und sich in Richtung der Anlagefläche des ersten und zweiten Abschnitts der Käseportion erstreckt. Die Ausgabeeinrichtung kann zumindest ein Leitelement aufweisen, welches zumindest einen äußeren Längsbereich der Transportbandeinrichtung auf einer der Auflagefläche abgewandten Seite und/oder die gefaltete Käseportion untergreift, so dass diese in eine definierte Lage bewegbar sind. Das Leitelement kann beispielsweise ein Leitblech oder eine Leitplatte aus einem Metall- oder Kunststoffmaterial umfassen. Beispielsweise sind die Ausgabeeinrichtung und/oder das Leitelement der Ausgabeeinrichtung integral mit dem ersten und/oder zweiten Führungselement ausgebildet.

Gemäß einer Ausführungsform umfasst die Ausgabeeinrichtung eine Bandvorrichtung mit einem ersten Ausgabeband und einem zweiten Ausgabeband, wobei das erste Ausgabeband dazu ausgebildet ist, die gefaltete Käseportion auf einer ersten Seitenfläche zu kontaktieren und wobei das zweite Ausgabeband dazu ausgebildet ist, die gefaltete Käseportion auf einer zweiten Seitenfläche zu kontaktieren, wobei die erste und die zweite Seitenfläche sich zumindest im Wesentlichen parallel zu einer Faltebene der Käseportion erstrecken, und wobei die Bandvorrichtung die gefaltete Käseportion derart führt, dass die gefaltete Käseportion durch die Ausgabeeinrichtung auf einer Seitenfläche liegend ausgegeben wird. Beispielsweise werden die Ausgabebänder in ihrem Verlauf aus einer senkrechten Orientierung kontinuierlich in eine horizontale Orientierung überführt. Die Ausgabebänder verlaufen dabei parallel. Der Verlauf der Ausgabebänder kann z.B. durch entsprechend ausgestaltete Leiteinrichtungen, etwa Leitbleche oder eine Abfolge von unterschiedlich geneigten Rollen, vorgegeben werden. Bevorzugt schließt sich die Ausgabeeinrichtung direkt an die Falteinrichtung an, d. h. die gefalteten Käseportionen werden von der Falteinrichtung direkt an die Ausgabeeinrichtung übergeben.

Gemäß einer weiteren Ausführungsform umfasst die Ausgabeeinrichtung zumindest eine drehbar gelagerte Leitwalze, insbesondere wobei die Leitwalze zu einer Drehbewegung antreibbar ist. Es kann auch vorgesehen sein, dass die Ausgabeeinrichtung eine Mehrzahl von drehbar gelagerten Leitwalzen umfasst, die unterschiedlich geneigt angeordnet sind, insbesondere wobei eine Neigung der Drehachsen der Leitwalzen in Transportrichtung gesehen ausgehend von einer die Faltachse enthaltenden Faltebene zunimmt.

Beispielsweise ist die in Transportrichtung erste oder vorderste Leitwalze aktiv antreibar und ragt über einen der seitlichen Randbereiche des Falttransportbands, so dass der entsprechende anlaufende Abschnitt der Käseportion diese kontaktiert und durch deren Drehbewegung von dem Falttransportband abgehoben wird. Nachfolgende Leitwalzen weisen eine zunehmende Neigung auf, so dass die Käseportion bei einer Bewegung in Transportrichtung zunehmend aus der nach dem Falten eingenommenen Lage gekippt wird. Der gegenüberliegende Randbereich des Falttransportbands weicht in Kipprichtung aus. Er kann dabei durch entsprechend angeordnete Führungsbügel oder Flächenelemente gestützt und/oder geführt werden.

Die vorliegende Erfindung betrifft ferner ein System zur Bearbeitung einer Käseportion in Form eines flachen Quaders, das eine Vorrichtung zum Falten der Käseportion gemäß zumindest einer der vorstehend beschriebenen Ausführungsformen umfasst. Zusätzlich sind eine separat ausgebildete Produktzufuhr, die dazu ausgebildet ist, eine Käseportion dem Einlaufbereich der Transportbandeinrichtung der Vorrichtung zuzuführen, und/oder eine Ausrichtvorrichtung, die dazu ausgebildet ist, die Käseportion für den Transport durch die Falteinrichtung auf der Auflagefläche bezüglich einer Mittelebene auszurichten, vorgesehen. Die Ausrichtvorrichtung kann der Produktzufuhr oder dem Einlaufbereich der Transportbandeinrichtung zugeordnet sein. Mögliche Ausführungsformen einer solchen Ausrichtvorrichtung sind rein beispielhaft Seitenführungsbleche und/oder aktiv betriebene oder passive Seitenführungsbänder.

Alternativ oder zusätzlich kann das System eine, insbesondere in Transportrichtung hinter der Falteinrichtung und bevorzugt hinter einer Ausgabeeinrichtung angeordnete, Schneideinrichtung umfassen, die dazu ausgebildet ist, eine gefaltete Käseportion in Einzelportionen zu zerteilen.

Ein weiterer Aspekt der vorliegenden Erfindung betrifft ein Verfahren zum Falten einer Käseportion in Form eines flachen Quaders, insbesondere mit einer Vorrichtung und/oder mit einem System gemäß zumindest einer der vorstehend beschriebenen Ausführungsformen, mit den Schritten
Zuführen einer Käseportion zu einem Einlaufbereich einer Transportbandeinrichtung mit zumindest einem flexiblen Transportband, wobei der Einlaufbereich der Transportbandeinrichtung eine Zufuhrebene definiert, und Ablegen der Käseportion auf einer Auflagefläche der Transportbandeinrichtung,
Transportieren der Käseportion mittels der Transportbandeinrichtung von dem Einlaufbereich in einer Transportrichtung entlang einer Transportstrecke zu einem Auslaufbereich,
Falten der Käseportion während des Transports entlang der Transportstrecke mittels einer zumindest abschnittsweise im Bereich der Transportstrecke angeordneten Falteinrichtung, wobei die Falteinrichtung zumindest einen ersten äußeren Längsbereich der Transportbandeinrichtung abschnittsweise aus der Zufuhrebene heraus aufstellt, so dass ein erster Abschnitt der Käseportion um eine Faltachse auf einen zweiten Abschnitt der Käseportion gefaltet wird.

Gemäß einer vorteilhaften Weiterbildung des Verfahrens wird die Käseportion vor dem Zuführen zu dem Einlaufbereich von einer Vorbearbeitungstemperatur auf eine Falttemperatur gekühlt wird, insbesondere auf eine Falttemperatur von 55°C bis 80°C, bevorzugt 65°C bis 70°C.

Gemäß einer vorteilhaften Weiterbildung des Verfahrens wird die Käseportion nach der Ausgabe aus dem Auslaufbereich gekühlt und/oder gesalzen, insbesondere in einem Solebad. Alternativ oder zusätzlich kann vorgesehen sein, dass die Käseportion vor oder während des Einlaufens in die Falteinrichtung mit Salz und/oder Kräutern, insbesondere Minze, belegt wird, welche somit nach Abschluss des Faltvorgangs in der Faltebene der gefalteten Käseportion zwischen dem ersten und dem zweiten Abschnitt der Käseportion angeordnet sind.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine erste Ausführungsform der erfindungsgemäßen Vorrichtung,
- Fig. 2a - 2c: vereinfachte Schnitte durch die Vorrichtung gemäß Fig. 1,
- Fig. 3: eine zweite Ausführungsform der erfindungsgemäßen Vorrichtung,
- Fig. 4: eine dritte Ausführungsform der erfindungsgemäßen Vorrichtung,
- Fig. 5: eine vierte Ausführungsform der erfindungsgemäßen Vorrichtung und
- Fig. 6: eine weitere Ausführungsform der Ausgabeeinrichtung.

Bei einigen Käsesorten ist eine Faltung des Produkts gewünscht oder gar Bestandteil der typischen Darreichungsform, beispielsweise bei dem bekannten zypriotischen Halloumi. Bisher wird das Falten manuell durchgeführt, was den Durchsatz hemmt und mit erheblichen Kosten verbunden ist.

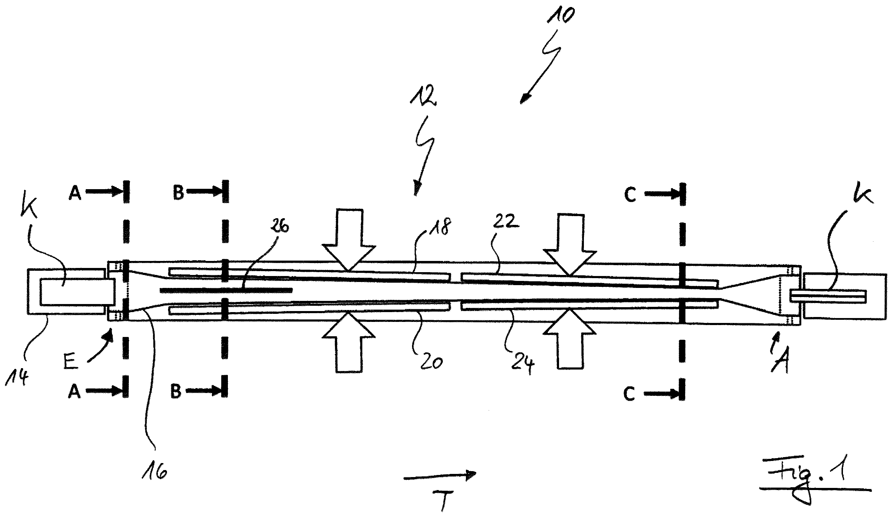

Fig. 1 zeigt ein System 10 zur Bearbeitung von Käseportionen K (gegebenenfalls mit einem Belag versehen, der insbesondere Minze umfasst), das eine Vorrichtung zum Falten der Käseportionen - kurz Faltvorrichtung 12 - umfasst. Die Käseportionen K liegen dabei in Form flacher Quader vor. Sie werden der Faltvorrichtung 12 mittels eines Produktzufuhrbands 14 zugeführt. Für den nun folgenden Schritt des Faltens der Käseportionen K ist es von großem Vorteil, wenn die Portionen K in sehr definierter Weise, insbesondere hinsichtlich ihrer Ausrichtung und Positionierung, an die Faltvorrichtung 12 übergeben werden. Wenn die Portionen K nicht korrekt auf dem Transportband 16 positioniert sind, kann es zu einem unschönen schrägen Falten des Produkts kommen, was letztlich bedeuten kann, dass die entsprechende Portion als Ausschuss zu betrachten ist.

Um dies zu vermeiden, können entsprechende Leiteinrichtungen (nicht gezeigt) im Bereich des Produktzufuhrbands 14 oder in vorgeschalteten Bereichen vorgesehen sein, die die Portionen K zuverlässig richtig ausrichten. Beispiele für solche Leiteinrichtungen sind parallel angeordnete Leitbleche oder - passive oder aktiv betriebene - Seitenleitbänder, die die korrekte Ausrichtung der Portionen K auf dem Produktzufuhrband 14 sicherstellen. Entsprechende Leiteinrichtungen können auch im Übergabebereich und/oder in einem Einlaufbereich E angeordnet sein.

Vor dem Einlaufen in die Falteinrichtung werden die Käseportionen K durch eine Kühleinrichtung von grundsätzlich bekannter Bauart auf Temperaturen von 55°C bis 80°C, bevorzugt 65°C bis 70°C, gekühlt. Es hat sich gezeigt, dass viele Käsesorten und insbesondere Halloumi in diesem Temperaturbereich geeignete elastische Eigenschaften für eine Faltung aufweisen.

Die Faltvorrichtung 12 umfasst ein flexibles oder elastisches Transportband 16, das für einen Transport der Portionen K in Transportrichtung T von dem Einlaufbereich E bis zu einem Auslaufbereich A sorgt. Im dargestellten Ausführungsbeispiel läuft das Transportband 16 in den Bereichen E, A über geeignete Umlenkrollen, die gestrichelt angedeutet sind.

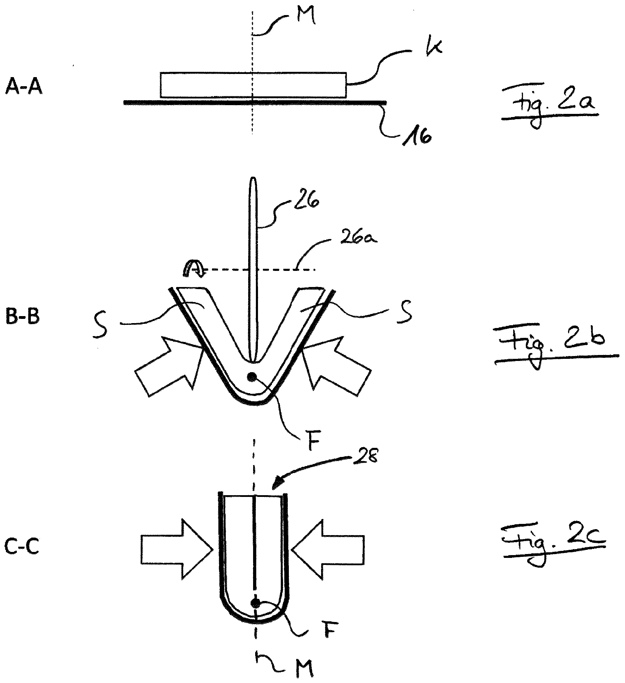

In dem Einlaufbereich E ist das Transportband 16 im Wesentlichen in einer Ebene angeordnet (Zufuhrebene). Zumindest der vordere Bereich der in die Faltvorrichtung 12 einlaufenden Käseportion K weist deshalb - wie zuvor auf dem Produktzufuhrband 14 - eine Form eines flachen Quaders auf (siehe Schnitt A-A in Fig. 2a). Die Portion K liegt dabei in einem Schnitt senkrecht zur Transportrichtung T mittig auf dem Transportband 16 auf, d. h. ihre Lage ist symmetrisch zu einer Mittelebene M.

Durch die Wirkung von Faltblechen 18, 20 werden seitliche Randbereiche des Transportbands 16, das gemäß der ersten Ausführungsform als Falttransportband ausgebildet ist, aus der Zufuhrebene aufgestellt, was auch zu einer Aufstellung seitlicher Abschnitte S der Portion K führt (siehe Schnitt B-B in Fig. 2b). Um die Aufstellung der Abschnitte S zu unterstützen, ist ein optionaler Niederhalter 26 vorgesehen, der im vorliegenden Ausführungsbeispiel als ein Rad ausgebildet ist. Der Niederhalter 26 verhindert, dass ein zwischen den Abschnitten S liegender Bereich der Portionen K von dem Transportband 16 abhebt. Das Niederhalterrad 26 kann passiv um eine Achse 26a drehbar gelagert sein. Optional ist es jedoch auch möglich, das Niederhalterrad 26 aktiv zu einer Drehbewegung anzutreiben, die mit der Bewegung des Transportband 16 synchronisiert ist.

Durch die Wirkung der Faltbleche 18, 20 und unterstützt durch das Niederhalterad 26 erfolgt somit eine Faltbewegung der Abschnitte S um eine Faltachse F. Die auf die Randbereiche des Transportbands 16 - und damit auch auf die Abschnitte S der darauf liegenden Portion K - wirkenden Kräfte sind rein schematisch durch Pfeile angedeutet.

Die Faltbleche 18, 20 bilden somit ein Art Kanal, der das Transportband 16 und damit die Käseportion K seitlich aufstellt. Die Faltbleche 18, 20 können im Wesentlichen ebene Flächen sein, die senkrecht oder schräg zu der Zufuhrebene angeordnet sind. Es ist jedoch auch möglich, dass ihre Neigung in Transportrichtung zunimmt, wobei die Zunahme insbesondere kontinuierlich ist, um eine möglichst schonende Faltung der Portionen K zu ermöglichen.

An der Eingangsseite der Faltbleche 18, 20 kann jeweils eine Rolle angeordnet sein, um zu verhindern, dass das Transportband 16 über eine Kante läuft, die es beansprucht. Es ist aber auch denkbar, angeschrägte Einlaufabschnitte o.ä. vorzusehen, um die Beanspruchung des Bandes 16 zu minimieren.

Wie der Fig. 1 zu entnehmen ist, konvergieren die Faltbleche 18, 20, sodass sich der von ihnen erzeugte Kanal verengt. In Transportrichtung T schließen sich weitere Faltbleche 22, 24 an, die ebenfalls einen konvergierenden Verlauf aufweisen. Es versteht sich, dass die Faltbleche 18, 22 bzw. 20, 24 miteinander verbunden oder einstückig ausgebildet sein können. Die Faltbleche 18, 20, 22, 24 sind bevorzugt auf der dem Transportband 16 zugewandten Seite glatt, um unnötige Reibung zu vermeiden.

Grundsätzlich kann eine beliebige Anzahl hintereinander angeordneter Faltelemente vorgesehen sein, die funktionell die vorstehend beschriebene Wirkung erzeugen.

Spätestens in einem in Transportrichtung T ausgangsseitigen Bereich der Faltvorrichtung 12 ist die Käseportionen K gefaltet, sodass die Seitenabschnitte S aufeinander liegen (siehe Schnitt C-C in Fig. 2c). Durch die konvergierende Anordnung der Faltbleche 18, 20, 22, 24 werden die Seitenabschnitte S hinreichend fest aufeinander gedrückt, sodass die Gefahr eines "Auseinanderspringens" der gefalteten Käseportionen K nach einem Ende der seitlichen Kraftbeaufschlagung minimiert wird.

In diesem Zusammenhang ist darauf hinzuweisen, dass es bei vielen Käsesorten während des Faltprozesses keine Entwässerung der Portionen K angestrebt wird. Das Transportband 16 kann daher als wasserundurchlässiges Band ausgeführt sein. Es sind aber auch Anwendungen denkbar, bei denen poröse und/oder mit Öffnungen versehene Bänder zum Einsatz gelangen.

Nach dem Auslaufen des Transportbandes 16 aus der Führung durch die Faltbleche 22, 24 klappen die zuvor aufgestellten seitlichen Randbereiche des Transportbandes in dem Auslaufbereich A wieder zurück in eine horizontale Ebene. Die gefaltete Käseportion K befindet sich in Fig. 1 in einer vertikalen Lage, so wie sie auch in Fig. 2c gezeigt ist, so dass ein Blick auf ihre Stirnseite 28 möglich ist. In dieser Situation besteht ein gewisses Risiko, dass die Käseportionen K sich wieder auffaltet. Daher ist es grundsätzlich erstrebenswert, dass die Käseportionen K auf einem der Abschnitte S zu liegen kommt, sodass das Eigengewicht des anderen Abschnitts S dem Auffalten entgegenwirkt. Für eine weitere Verarbeitung der gefalteten Käseportionen K ist es zudem vorteilhaft, wenn alle Portionen K zuverlässig auf der gleichen Seite zu liegen kommen.

Zu diesem Zweck kann die Faltvorrichtung 12 eine Ausgabeeinrichtung 30 aufweisen, die die Käseportionen K nach dem Durchlaufen der Faltbleche 22, 24 in einer definierten Lage auf dem Auslaufbereich A ablegt.

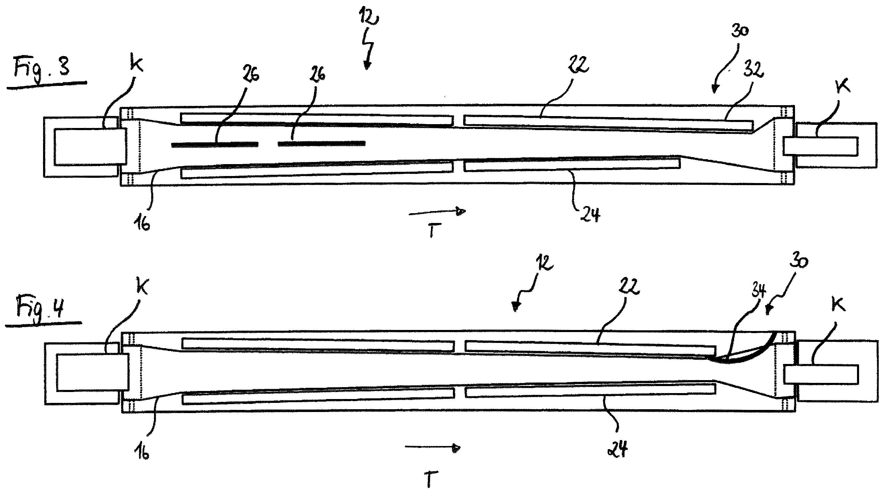

Eine Faltvorrichtung 12 gemäß einer zweiten Ausführungsform ist in Fig. 3 gezeigt. Diese umfasst eine Ausgabeeinrichtung 30, die integral mit dem Faltblech 22 ausgebildet ist. Die Ausgabeeinrichtung 30 aus Fig. 3 umfasst ein Leitblech 32, das als Verlängerung des Faltblechs 22 ausgebildet ist. Während das Transportband 16 auf der dem Faltblech 24 zugewandten Seite bereits aus der Führung des Faltblechs 24 herausläuft und daher wieder in die horizontale Ebene zurückklappt, wird der dem Faltblech 22 zugewandte seitliche Randbereich durch das Leitblech 32 weiter in der aufgestellten Position gemäß Fig. 2c geführt, sodass die gefaltete Käseportion K auf ihrem dem Faltblech 24 zugewandten Seitenabschnitt S abgelegt wird und von dort aus zu dem Auslaufbereich A der Faltvorrichtung 12 transportiert werden kann. Das Leitblech 32 kann sogar abschnittsweise überkippt sein, um die Ablage der gefalteten Portion K noch zuverlässiger zu gestalten.

Im Unterschied zu der ersten Ausführungsform sind gemäß Fig. 3 zwei Niederhalteräder 26 vorgesehen, die besonders zuverlässig ein Verrutschen oder Abheben der Käseportion K von dem Transportband 16 während der Aufstellbewegung verhindern. Selbstverständlich kann die Art und Anzahl an Niederhaltern bei jeder der gezeigten Ausführungsformen variiert werden, wobei der Einsatz eines Niederhalters grundsätzlich optional ist.

Eine Faltvorrichtung 12 gemäß einer dritten Ausführungsform, welche ohne Niederhalter ausgebildet ist, jedoch optional um einen solchen ergänzt werden kann, ist in Fig. 4 gezeigt. Die Faltvorrichtung 12 von Fig. 4 umfasst eine Ausgabeeinrichtung 30 mit einem separaten, gebogen ausgebildeten Leitblech 34. Das gebogene Leitblech 34 greift von der offenen "Kanalseite" her am auslaufseitigen Ende des Faltblechs 22 zwischen das aufgestellte Transportband 16 und die gefaltete Käseportion K ein und "streift" dadurch eine Seite der Portion K während des Verlassens der Faltbleche 22, 24 von dem Transportband 16 ab und drängt sie in Richtung des Faltblechs 24, sodass die Käseportion K auf dem entsprechenden Seitenabschnitt S zum Liegen kommt und aus dem Auslaufbereich A der Faltvorrichtung transportiert werden kann.

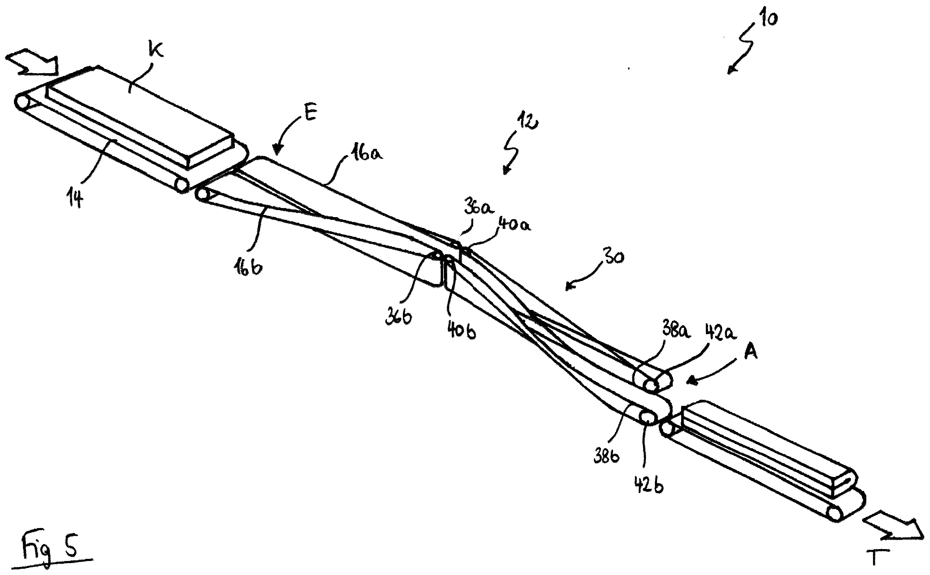

Fig. 5 zeigt ein System 10 zur Bearbeitung von Käseportionen K mit einer Faltvorrichtung 12 gemäß einer vierten Ausführungsform. Auch hier werden die Käseportionen der Faltvorrichtung 12 mittels eines Produktzufuhrbands 14 zugeführt, wobei, wie vorstehend beschrieben, Leiteinrichtungen (nicht gezeigt) zur Ausrichtung der Käseportionen K im Bereich des Produktzufuhrbands 14 oder in vorgeschalteten Bereichen und/oder im Übergabebereich und/oder in einem Einlaufbereich E vorgesehen sein können.

Die Faltvorrichtung 12 umfasst ein erstes Transportband 16a und ein daneben angeordnetes zweites Transportband 16b für den Transport der Portionen K in Transportrichtung T von dem Einlaufbereich E bis zu einem Auslaufbereich A. Die Käseportion K steht mit dem ersten und zweiten Transportband 16a, 16b über eine Auflagefläche in Kontakt, wobei sich die Auflagefläche über beide Transportbänder 16a, 16b erstreckt. Die Portion K liegt in der gezeigten Ausführungsform in einem Schnitt senkrecht zur Transportrichtung T mittig auf den beiden Transportbändern 16a, 16b auf, d. h. ihre Lage ist symmetrisch zu einer Mittelebene M der Transportbandeinrichtung.

In dem Einlaufbereich E sind die Transportbänder 16a, 16b im Wesentlichen in einer Ebene angeordnet (Zufuhrebene). Dort laufen beiden Transportbänder 16a, 16b über geeignete Umlenkrollen, die koaxial angeordnet sind. Wahlweise können beide Transportbänder 16a, 16b auch über eine gemeinsame Umlenkrolle geführt werden, sodass eine Synchronisation der beiden Transportbänder 16a, 16b sichergestellt ist. Alternativ oder zusätzlich kann die Synchronisation über eine Steuereinrichtung (nicht gezeigt) der Faltvorrichtung 12 gesteuert oder geregelt werden.

Um die Seitenabschnitte S der Käseportion K aufzustellen, werden durch die Wirkung einer Falteinrichtung das erste und das zweite Transportband 16a, 16b entlang der Transportrichtung T jeweils in Richtung der Mittelebene M aus der Zufuhrebene Z heraus aufgestellt, was auch zu einer Aufstellung seitlicher Abschnitte S der Portion K führt. Dies ist vergleichbar mit der in Fig. 2b (Schnitt B-B) gezeigten Situation, wobei, abweichend von der Darstellung dort, gemäß der vierten Ausführungsform in der Mittelebene M zwischen den Transportbändern eine Lücke entsteht. Die teilweise gefaltete Käseportion K wird durch die Falt- bzw. Presskraft, die das erste und das zweite Transportband 16a, 16b ausüben, gehalten.

Um die Aufstellung der Abschnitte S zu unterstützen, kann auch gemäß der vierten Ausführungsform ein optionaler Niederhalter 26 vorgesehen sein, der ein Abheben der Käseportion K von den Transportbändern 16a, 16b und/oder ein Verrutschen der Portion K verhindert.

Die Falteinrichtung 12 umfasst ein erstes Faltelement, welches das erste Transportband 16a aufstellt und ein zweites Faltelement, das das zweite Transportband 16b aufstellt. Jedes der Faltelemente umfasst eine bezüglich der Zufuhrebene verkippte, insbesondere vertikal ausgerichtete, Umlenkrolle 36a, 36b, welche an einem dem Einlaufbereich E abgewandten Ende des ersten und zweiten Transportbands 16a, 16b angeordnet sind, und welche das erste und das zweite Transportband derart verdrillen, dass es letztlich bezüglich der Zufuhrebene um etwa 90 Grad verkippt verläuft. Dadurch sind die Seitenabschnitte S der Käseportion am Ende des ersten und zweiten Transportbands 16a, 16b spätestens am auslaufseitigen Ende der Transportbänder 16a, 16b in einem Schnitt quer zur Transportrichtung T vergleichbar zu der in Fig. 2c gezeigten Situation (Schnitt C-C) aufgestellt. Der Abstand zwischen dem ersten und dem zweiten Transportband 16a, 16b ist dabei derart gewählt, dass eine definierte Falt- bzw. Presskraft auf die Seitenabschnitte S der Käseportion K ausgeübt wird.

Zusätzlich zu den Umlenkrollen 36a, 36b können das erste und zweite Faltelement jeweils ein geeignet geformtes Faltblech (nicht gezeigt) umfassen, das einen die Auflagefläche für die Käseportion K ausbildenden Transportabschnitt des ersten bzw. zweiten Transportbands 16a, 16b untergreift und somit das Verdrillen desselben jeweils unterstützt. Beispielsweise sind die Faltelemente oder Faltbleche jeweils zwischen dem sich in Transportrichtung T bewegenden Arbeitstrum und dem sich in die Gegenrichtung bewegenden Leertrum der Bänder 16a, 16b angeordnet. Dabei kann insbesondere vorgesehen sein, dass die Neigung der die Faltelemente oder Faltbleche in Transportrichtung sukzessive bis zu der Verkippung der Umlenkrollen 36a, 36b zunimmt, wobei die Zunahme insbesondere kontinuierlich ist, um eine möglichst schonende Faltung der Portion K zu ermöglichen.

Wie der Fig. 5 zu entnehmen ist, konvergieren das erste und das zweite Transportband 16a, 16b in Transportrichtung T derart, dass sich der durch sie definierte (in vertikaler Richtung oben und unten offene) Kanal verengt, insbesondere so weit, dass eine optimale Falt- oder Presskraft auf die Seitenabschnitte S der gefalteten Käseportion K ausgeübt wird. Grundsätzlich kann sich an das erste und das zweite Transportband 16a, 16b ein weiterer Abschnitt der Transportbandeinrichtung anschließen, in der die gefaltete Käseportion K für eine definierte Strecke und/oder Dauer bei definierter Falt- oder Presskraft geführt wird, um eine "Gewöhnung" der Käseportion an den gefalteten Zustand zu ermöglichen. So kann die Gefahr eines "Auseinanderspringens" der gefalteten Käseportionen K nach einem Ende der seitlichen Kraftbeaufschlagung minimiert und die resultierende Faltung stabilisiert werden.

Beim Auslaufen aus den Transportbändern 16a, 16b befindet sich die Käseportion K in einer vertikalen Lage, so wie sie auch in Fig. 2c gezeigt ist. Um die Portion K auf einem ihrer Seitenabschnitte S abzulegen, sodass das Eigengewicht des anderen Abschnitts S dem Auffalten entgegenwirkt, läuft die gefaltete Käseportion K in Transportrichtung T in eine Ausgabeeinrichtung 30 ein. Diese legt die Käseportion K in einer definierten Lage im Auslaufbereich A der Faltvorrichtung 12 ab.

Die Ausgabeeinrichtung 30 umfasst eine Bandvorrichtung mit einem ersten Ausgabeband 38a und einem zweiten Ausgabeband 38b, welche jeweils als Endlosband um jeweils zwei Umlenkrollen geführt werden. Die dem Ende der Transportbänder 16a, 16b zugeordneten Umlenkrollen 40a, 40b des ersten und zweiten Ausgabebands 38a, 38b sind dabei jeweils parallel zu den Umlenkrollen 36a, 36b des ersten und zweiten Transportbands 16a, 16b ausgerichtet und in Transportrichtung T hinter diesen angeordnet. So kann die gefaltete Käseportion K unter Aufrechterhaltung einer Falt- oder Presskraft auf ihre Seitenabschnitte S an die Ausgabeeinrichtung 30 übergeben werden, wobei das erste Ausgabeband 38a die gefaltete Käseportion K an einem ersten Seitenabschnitt S, das zweite Ausgabeband 38b die gefaltete Käseportion K an dem zweiten Seitenabschnitt S kontaktiert.

Die auf Seiten des Auslaufbereichs A der Faltvorrichtung 12 angeordneten Umlenkrollen 42a, 42b der Ausgabebänder 38a, 38b sind parallel zueinander, jedoch mit einem vertikalen Versatz übereinander angeordnet. Das erste und das zweite Ausgabeband 38a, 38b weisen entsprechend einen verdrillten Verlauf zwischen ihren jeweiligen Umlenkrollen 40a, 42a, 40b, 42b auf, sodass letztlich die Käseportion K in Transportrichtung T von einer vertikalen Ausrichtung in eine Seitenlage auf einem der Seitenabschnitte S bewegt wird. Die Ausgabebänder 38a, 38b der Ausgabeeinrichtung 30 verlaufen derart, dass ihre Kontaktflächen zur Kontaktierung der Käseportion K einander bezüglich der Transportrichtung T zu jeder Zeit gegenüberliegen. Es können Leitelemente (nicht gezeigt) vorgesehen sein, die die Ausgabebänder 38a, 38b untergreifen und die Verdrillung der Bänder 38a, 38b jeweils unterstützen. Beispielsweise sind die Leitelemente jeweils zwischen dem sich in Transportrichtung bewegenden Arbeitstrum und dem sich in die Gegenrichtung bewegenden Leertrum der Bänder 38a, 38b angeordnet.

Am auslaufseitigen Ende der Ausgabeeinrichtung 30 wird die auf einem Seitenabschnitt S aufliegende gefaltete Käseportion K an ein Produktabfuhrband übergeben.

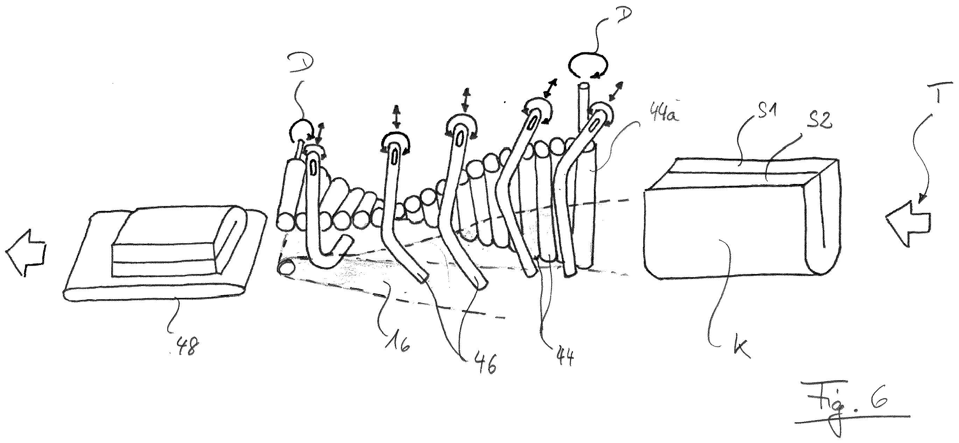

Fig. 6 zeigt eine weitere Ausführungsform der Ausgabeeinrichtung 30. Beispielsweise wird die Käseportion K in der in Fig. 2c gezeigten Situation an die Ausgabeeinrichtung 30 herangeführt. Die seitlichen Randbereiche des Transportbands 16 (nicht gezeigt) liegen an den beiden Seitenabschnitten S1, S2 der Portion K an. Eine Abfolge von Leitwalzen 44 der Ausgabeeinrichtung 30 ragt in den Bereich zwischen die aufgestellten seitlichen Randbereichen des Transportbands 16. Die anlaufende Portion K kommt daher zwangläufig in Kontakt mit einer vordersten oder eingangsseitigen Walze 44a, die aktiv zu einer Drehbewegung D angetrieben wird. Dadurch wird der Seitenabschnitt S1 von dem ihm zugeordneten seitlichen Randbereich (nicht gezeigt) abgehoben. Die in Transportrichtung T nachfolgenden Walzen 44 (bevorzugt nicht aktiv angetrieben, aktiver Antrieb aber denkbar) weisen eine zunehmende Neigung zu der Mittelebene M auf, so dass die Portion K bei einer weiteren Bewegung in Transportrichtung T graduell gekippt wird, bis sie in der Horizontalen (oder einer beliebigen anderen Ebene) zu liegen kommt. Um dies zu ermöglichen, weicht der dem Seitenabschnitt S2 zugeordnete Randbereich des Bands 16 (gestrichelt angedeutet) aus. Dabei wird er von entsprechend geformten und angeordneten Führungsbügeln 46 oder anderen geeigneten Führungsmitteln (z.B. gekrümmte Flächenelemente o.ä.) geführt und unterstützt. Der dem Seitenabschnitt S1 zugeordnete Randbereich des Bands 16 kann beliebig geführt werden. Insbesondere kann er ebenfalls in die Horizontale gebracht werden. Es versteht sich, dass eine Unterstützung dieses Seitenabschnitts von geringerer Bedeutung ist.

Die Haltebügel 46 können einstell- oder justierbar sein, um die Ausgabeeinrichtung 30 bedarfsgerecht anpassen zu können. Dies wird in Fig. 6 durch Pfeile angedeutet.

Als optionale Maßnahme wird die ausgangseitige Leitwalze 44b ebenfalls aktiv angetrieben, um den Ausstoß der Portion K aus der Ausgabeeinrichtung 30 und ihre Abgabe an ein Abfuhrband 48 zur verbessern.

### Bezugszeichenliste

- 10: System zur Bearbeitung von Käseportion
- 12: Faltvorrichtung
- 14: Produktzufuhrband
- 16: Transportband
- 16a: erstes Transportband
- 16b: zweites Transportband
- 18,20: Faltbleche
- 22, 24: weitere Faltbleche
- 26: Niederhalterad
- 26a: Achse des Niederhalterads
- 28: Stirnseite der Käseportion
- 30: Ausgabeeinrichtung
- 32: integral ausgebildetes Leitblech
- 34: gebogenes Leitblech
- 36a: Umlenkrolle des ersten Transportbands
- 36b: Umlenkrolle des zweiten Transportbands
- 38a: erstes Ausgabeband
- 38b: zweites Ausgabeband
- 40a: dem Ende des Transportbands 16a zugeordnete Umlenkrolle des ersten Ausgabeband
- 40b: dem Ende des Transportbands 16b zugeordnete Umlenkrolle des zweiten Ausgabebands
- 42a: auf Seiten des Auslaufbereichs angeordnete Umlenkrolle des ersten Ausgabebands
- 42b: auf Seiten des Auslaufbereichs angeordnete Umlenkrolle des zweiten Ausgabebands
- 44, 44a, 44b: Leitwalze
- 46: Führungsbügel
- 48: Abfuhrband
- E: Einlaufbereich
- K: Käseportion
- T: Transportrichtung
- A: Auslaufbereich
- M: Mittelebene
- S, S1, S2: Seitenabschnitt
- F: Faltachse
- D: Drehbewegung

## Patentansprüche

1. Vorrichtung (12) zum Falten einer Käseportion (K) in Form eines flachen Quaders, umfassend
eine Transportbandeinrichtung mit zumindest einem flexiblen Transportband (16, 16a, 16b) mit einer Auflagefläche für die Käseportion (K), wobei die Transportbandeinrichtung dazu ausgebildet ist, die Käseportion (K) von einem Einlaufbereich (E) in einer Transportrichtung (T) entlang einer Transportstrecke zu einem Auslaufbereich (A) zu transportieren, wobei der Einlaufbereich (E) der Transportbandeinrichtung eine Zufuhrebene definiert, und
eine Falteinrichtung, die zumindest abschnittsweise im Bereich der Transportstrecke angeordnet ist und die dazu ausgebildet ist, zumindest einen ersten äußeren Längsbereich der Transportbandeinrichtung abschnittsweise aus der Zufuhrebene heraus aufzustellen, so dass ein erster Abschnitt (S) der Käseportion (K) um eine Faltachse (F) auf einen zweiten Abschnitt (S) der Käseportion (K) faltbar ist.

2. Vorrichtung (12) nach Anspruch 1,
wobei die Falteinrichtung dazu ausgebildet ist, einen dem ersten äußeren Längsbereich bezüglich einer Mittelebene (M) der Transportbandeinrichtung gegenüberliegenden zweiten äußeren Längsbereich der Transportbandeinrichtung abschnittsweise aus der Zufuhrebene heraus aufzustellen.

3. Vorrichtung (12) nach Anspruch 1 oder 2,
wobei die Transportbandeinrichtung ein Falttransportband (16) umfasst, wobei der erste äußere Längsbereich der Transportbandeinrichtung durch einen ersten seitlichen Randbereich eines Transportabschnitts des Falttransportbands (16) und der zweite äußere Längsbereich der Transportbandeinrichtung einen dem ersten seitlichen Randbereich bezüglich der Mittelebene (M) des Falttransportbands (16) gegenüberliegenden zweiten seitlichen Randbereich des Transportabschnitts des Falttransportbands (16) gebildet ist.

4. Vorrichtung (12) zumindest einem der vorstehenden Ansprüche,
wobei die Falteinrichtung eine Führungsanordnung umfasst, die zumindest ein erstes Führungselement aufweist, das den ersten äußeren Längsbereich der Transportbandeinrichtung auf einer der Auflagefläche abgewandten Seite entlang der Transportstrecke zumindest abschnittsweise untergreift und diesen in Richtung einer Mittelebene (M) der Transportbandeinrichtung aufstellt, insbesondere wobei die Führungsanordnung ein zweites Führungselement umfasst, das den zweiten äußeren Längsbereich der Transportbandeinrichtung auf einer der Auflagefläche abgewandten Seite entlang der Transportstrecke zumindest abschnittsweise untergreift und diesen in Richtung einer Mittelebene (M) der Transportbandeinrichtung aufstellt.

5. Vorrichtung (12) nach Anspruch 4,
wobei das erste und das zweite Führungselement zumindest abschnittsweise symmetrisch bezüglich der Mittelebene (M) der Transportbandeinrichtung und/oder der Auflagefläche ausgebildet und/oder angeordnet sind und/oder wobei das erste und das zweite Führungselement bezüglich der Mittelebene (M) der Transportbandeinrichtung voneinander beabstandet sind, wobei sich der Abstand in Transportrichtung (T) verringert, insbesondere kontinuierlich verringert.

6. Vorrichtung (12) nach zumindest einem der Ansprüche 3 bis 5,
wobei das erste und/oder das zweite Führungselement derart angeordnet sind, dass sie mit der Zufuhrebene zumindest abschnittsweise im Wesentlichen einen Winkel von 90 Grad einschließen.

7. Vorrichtung (12) nach zumindest einem der Ansprüche 3 bis 6,
wobei das erste und/oder das zweite Führungselement derart ausgebildet und/oder angeordnet sind, dass der durch das erste und/oder zweite Führungselement und die Zufuhrebene eingeschlossene Winkel im Verlauf der Transportstrecke in Transportrichtung (T), insbesondere kontinuierlich, zumindest abschnittsweise variiert.

8. Vorrichtung (12) nach zumindest einem der Ansprüche 3 bis 7,
wobei das erste und/oder das zweite Führungselement zumindest ein Führungsblech (18, 20, 22, 24) umfassen, insbesondere wobei das zumindest eine Führungsblech (18, 20, 22, 24) auf einer einem Transportabschnitt der Transportbandeinrichtung zugewandten Seite eine glatte Oberfläche aufweist.

9. Vorrichtung (12) nach zumindest einem der Ansprüche 3 bis 8,
wobei das erste und/oder das zweite Führungselement zumindest eine Transportrolle (36a, 36b) umfassen.

10. Vorrichtung (12) nach zumindest einem der vorstehenden Ansprüche, wobei die Falteinrichtung zumindest einen Niederhalter aufweist, der dazu ausgebildet ist, eine auf der Auflagefläche angeordnete Käseportion (K) auf ihrer der Auflagefläche abgewandten Seite mit einer Niederhaltekraft zu beaufschlagen, insbesondere wobei die Käseportion (K) entlang der Faltachse (F) mit der Niederhaltkraft beaufschlagbar ist, insbesondere
wobei der Niederhalter zumindest ein Niederhalterad (26) umfasst, das um eine senkrecht zur Transportrichtung (T) orientierte Rotationsachse (26a) aktiv oder passiv drehbar gelagert ist.

11. Vorrichtung (12) nach zumindest einem der vorstehenden Ansprüche, wobei die Falteinrichtung eine Ausgabeeinrichtung (30) aufweist, die dazu ausgebildet ist, eine gefaltete Käseportion (K) in eine definierte Lage zu überführen und auszugeben und/oder auf der Transportbandeinrichtung abzulegen.

12. Vorrichtung (12) nach Anspruch 11,
wobei die Ausgabeeinrichtung (30) zumindest ein Leitelement (32, 34) aufweist, welches zumindest einen äußeren Längsbereich der Transportbandeinrichtung auf einer der Auflagefläche abgewandten Seite und/oder die gefaltete Käseportion (K) untergreift, so dass diese in eine definierte Lage bewegbar sind.

13. Vorrichtung nach Anspruch 11 oder 12,
wobei die Ausgabeeinrichtung (30) zumindest eine drehbar gelagerte Leitwalze (44, 44a, 44b) umfasst, insbesondere wobei die Leitwalze (44a, 44b) zu einer Drehbewegung (D) antreibbar ist.

14. Vorrichtung nach Anspruch 13,
wobei die Ausgabeeinrichtung (30) eine Mehrzahl von drehbar gelagerten Leitwalzen (44, 44a, 44b) umfasst, die unterschiedlich geneigt angeordnet sind, insbesondere wobei eine Neigung der Drehachsen der Leitwalzen in Transportrichtung (T) gesehen ausgehend von einer die Faltachse (F) enthaltenden Faltebene zunimmt.

15. Verfahren zum Falten einer Käseportion (K) in Form eines flachen Quaders, insbesondere mit einer Vorrichtung (12) nach zumindest einem der Ansprüche 1 bis 14, mit den Schritten
Zuführen einer Käseportion (K) zu einem Einlaufbereich (E) einer Transportbandeinrichtung mit zumindest einem flexiblen Transportband (16, 16a, 16b), wobei der Einlaufbereich (E) der Transportbandeinrichtung eine Zufuhrebene definiert, und Ablegen der Käseportion (K) auf einer Auflagefläche der Transportbandeinrichtung,
Transportieren der Käseportion (K) mittels der Transportbandeinrichtung von dem Einlaufbereich (E) in einer Transportrichtung (T) entlang einer Transportstrecke zu einem Auslaufbereich (A),
Falten der Käseportion (K) während des Transports entlang der Transportstrecke mittels einer zumindest abschnittsweise im Bereich der Transportstrecke angeordneten Falteinrichtung, wobei die Falteinrichtung zumindest einen ersten äußeren Längsbereich der Transportbandeinrichtung abschnittsweise aus der Zufuhrebene heraus aufstellt, so dass ein erster Abschnitt (S) der Käseportion (K) um eine Faltachse (F) auf einen zweiten Abschnitt (S) der Käseportion gefaltet wird, insbesondere wobei die Käseportion (K) vor dem Zuführen zu dem Einlaufbereich (E) von einer Vorbearbeitungstemperatur auf eine Falttemperatur gekühlt wird, insbesondere auf eine Falttemperatur von 55°C bis 80°C, bevorzugt 65°C bis 70°C.
